Europäisches Patentamt

European Patent Office

Office européen des brevets

(19)

(11) **EP 0 743 474 B1**

(12) **EUROPÄISCHE PATENTSCHRIFT**

| | |
|---|---|
| (45) Veröffentlichungstag und Bekanntmachung des Hinweises auf die Patenterteilung:<br>**13.10.1999  Patentblatt 1999/41** | (51) Int Cl.[6]: **F16H 53/04**, F16H 49/00,<br>H01H 43/04 |

(21) Anmeldenummer: **96102639.0**

(22) Anmeldetag: **22.02.1996**

(54) **Vorrichtung zur Auslösung eines Vorgangs in Abhängigkeit von der Winkelstellung einer Welle**

Device for initiating an action depending on the angular position of a shaft

Dispositif de déclenchement d'une action en fonction de la position angulaire d'un arbre

(84) Benannte Vertragsstaaten:
**AT CH FR GB IT LI NL**

(30) Priorität: **17.05.1995  DE 19518053**

(43) Veröffentlichungstag der Anmeldung:
**20.11.1996  Patentblatt 1996/47**

(73) Patentinhaber: **MAX STEGMANN GmbH ANTRIEBSTECHNIK - ELEKTRONIK D-78166 Donaueschingen (DE)**

(72) Erfinder:
• **Held, Siegfried**
**78166 Donaueschingen-Grüningen (DE)**
• **Maier, Josef**
**78176 Blumberg (DE)**

(74) Vertreter: **Patentanwälte Westphal, Mussgnug & Partner Waldstrasse 33 78048 Villingen-Schwenningen (DE)**

(56) Entgegenhaltungen:
DE-A- 4 022 735          DE-A- 4 038 555
GB-A- 905 015

• AUTOMOTIVE ENGINEERING, Bd. 95, Nr. 6, Juni 1987, WARRENDALE US, Seiten 81-87, XP002029494 NELSON, MICHAEL T; ELROD, ALVON C.: "Continuous Camlobe Phasing: an advanced timing approach"
• MACHINE DESIGN, 1960, Seiten 160-173, XP002029495 MUSSER, C W: "The Harmonic Drive"

## Beschreibung

Die Erfindung betrifft eine Vorrichtung zur Auslösung eines Vorgangs in Abhängigkeit von der Winkelstellung einer Welle gemäß dem Oberbegriff des Anspruchs 1.

Vorrichtungen dieser Gattung sind mechanische Bauelemente, die dazu dienen, von der Drehbewegung bzw. Winkelstellung einer Welle gesteuert Schalt- oder Steuerungsvorgänge auszulösen. Die Vorrichtungen werden hauptsächlich bei Stellantrieben, mechanischen Steuerungen und Programmlaufwerken eingesetzt. Die Auslösung des Schalt- oder Steuervorgangs erfolgt mittels einer Auslösescheibe, die z. B. über Nocken Schalter oder sonstige mechanische Elemente betätigt. Ebenso kann die Auslösescheibe magnetische oder optischen Sensoren betätigen.

Die den Vorgang auslösende Auslösescheibe ist gegenüber der Welle in ihrer Winkelstellung verstellbar, um die Auslösung des Schalt- oder Steuervorgangs einer gewünschten Winkelstellung der Welle genau zuordnen zu können.

Hierzu ist es zum Beispiel aus der GB-A-905015 und dem Artikel "Continuous Camlobe Phasing" in Automotive Engineering, 95 (1987), Nr. 6, Seiten 81 bis 87 bekannt, die Auslösescheibe mittels einer drehbar auf dem Grundkörper gelagerten Verstellscheibe über ein sogenanntes Harmonic-Drive-Getriebe zu verstellen. Ein solches Harmonic-Drive-Getriebe, wie es zum Beispiel in der US-PS 2,906,143 beschrieben ist, weist einen inneren, üblicherweise elliptischen Verformungskörper (üblicherweise Wave Generator genannt), einen flexiblen Zahnring mit einer Außenverzahnung (üblicherweise Flexspline genannt) und einen äußeren Zahnkranz mit einer Innenverzahnung (üblicherweise Circular Spline genannt) auf. Durch Antrieb des Verformungskörpers wird der flexible Zahnring mit einem entsprechend der Drehung des Verformungskörpers wandernden Umfangbereich seine Außenverzahnung in Zahneingriff mit der Innenverzahnung des äußeren Zahnkranzes gebracht. Die Zahnzahlen der Außenverzahnung des flexiblen Zahnringes und der Innenverzahnung des äußeren Zahnkranzes unterscheiden sich, wodurch sich das Untersetzungsverhältnis des Getriebes ergibt.

Dabei wird ein solches Harmonic-Drive-Getriebe in der Weise eingesetzt, dass der Verformungskörper mittels einer Verstellscheibe gegenüber dem auf der Welle drehfest sitzenden Grundkörper verdreht werden kann. Der flexible Zahnring ist an dem Grundkörper unverdrehbar gelagert, so dass der durch die Verdrehung des Verformungskörpers wandernde Zahneingriff zwischen dem flexiblen Zahnring und dem äußeren Zahnkranz aufgrund der unterschiedlichen Zahnzahlen zu einer Drehung des äußeren Zahnkranzes und damit der Auslösescheibe führt. Das Untersetzungsverhältnis i ergibt sich dabei aus den Zahnzahlen $Z_A$ des äußeren Zahnkranzes und $Z_F$ des flexiblen Zahnringes zu

$$i = \frac{Z_A - Z_F}{Z_A}$$

Die Verdrehung des Verformungskörpers mittels der Verstellscheibe ermöglicht somit eine sehr feine Verstellung der Auslösescheibe gegenüber dem Grundkörper bzw. der Welle. Da die Auslösescheibe mittels des Harmonic-Drive-Getriebes um 360° Grad gedreht gedreht werden kann, ist eine Vorjustierung der Vorrichtung nicht erforderlich.

Bei der bekannten Vorrichtung nach der GB-A-905 015 sitzt der flexible Zahnring reibschlüssig in dem Verformungskörper. Zum Verstellen der Auslösestellung muss der Verformungskörper unter Überwindung dieses Reibschlusses gegen den flexiblen Zahnring verdreht werden. Ist der Reibschluss gering, so dass ein manuelles Verstellen möglich ist, so gibt der Reibschluss keine zuverlässige Sicherheit gegen eine unbeabsichtigte Verstellung, zum Beispiel bei Erschütterungen und Vibrationen der Welle. Bei starkem Reibschluss ist eine manuelle Verstellung nicht möglich und ein Hilfswerkzeug ist erforderlich.

Der Erfindung liegt die Aufgabe zugrunde, eine Vorrichtung zur Auslösung eines Vorganges in Abhängigkeit von der Winkelstellung einer Welle zu schaffen, die ohne Hilfswerkzeug auch im eingebauten Zustand leicht und exakt einstellbar ist und bei der eine unbeabsichtigte Verstellung ausgeschlossen ist.

Diese Aufgabe wird erfindungsgemäß gelöst durch eine Vorrichtung mit den Merkmalen des Anspruchs 1.

Vorteilhafte Ausführungen der Erfindung sind in den Unteransprüchen angegeben.

Erfindungsgemäß greift der Verformungskörper in Winkelteilungsschritten rastend in den flexiblen Zahnring ein. Diese Rastung hat zum einen den Vorteil, dass auch Vibrationen der Welle, wie sie im Betrieb auftreten, nicht zu einer Verdrehung des Verformungskörpers gegenüber dem flexiblen Zahnring und damit zu einer Verstellung der Auslösescheibe führen können. Zum anderen ergibt das rastende Weiterdrehen der Verstellscheibe mit dem Verformungskörper beim Einstellen der Vorrichtung von Hand ein gutes Gefühl für den Verstellwinkel. Wegen des hohen Untersetzungsverhältnisses ist die schrittweise rastende Verdrehung des Verformungskörpers ohne nachteiligen Einfluss auf die Feineinheit der Winkeleinstellung der Auslösescheibe.

Eine vorteilhafte kostengünstige Herstellung der Vorrichtung ergibt sich, wenn die Vorrichtung aus Kunststoff hergestellt wird. Es sind für die Vorrichtung nur vier Spritzgussteile erforderlich, nämlich der Grundkörper, die Verstellscheibe mit dem angeformten Verformungskörper, der flexible Zahnring und der äußere Zahnkranz mit der angeformten Auslösescheibe. Die vier Einzelteile können bei der Montage ohne zusätzliche Hilfsstoffe zusammengeklipst werden.

Im folgenden wird die Erfindung anhand eines in der Zeichnung dargestellten Ausführungsbeispiels näher erläutert. Es zeigen

Figur 1 einen Axialschnitt durch die Vorrichtung und

Figur 2 die Vorrichtung im Schnitt gemäß den Schnittlinien A-A und B-B und in der Ansicht gemäß C in Figur 1.

Die Vorrichtung besteht aus vier Kunststoff-Spritzgußteilen, nämlich einem Grundkörper 10, einer Verstellscheibe 20, einem flexiblen Zahnring 30 und einer Auslösescheibe 40. Die vier Kunststoff-Spritzgußteile werden bei der Montage axial ineinander gesetzt und durch Verklipsen miteinander verbunden und zusammengehalten, so daß sich eine einfache rationelle und hilfsmittelfreie Montage ergibt.

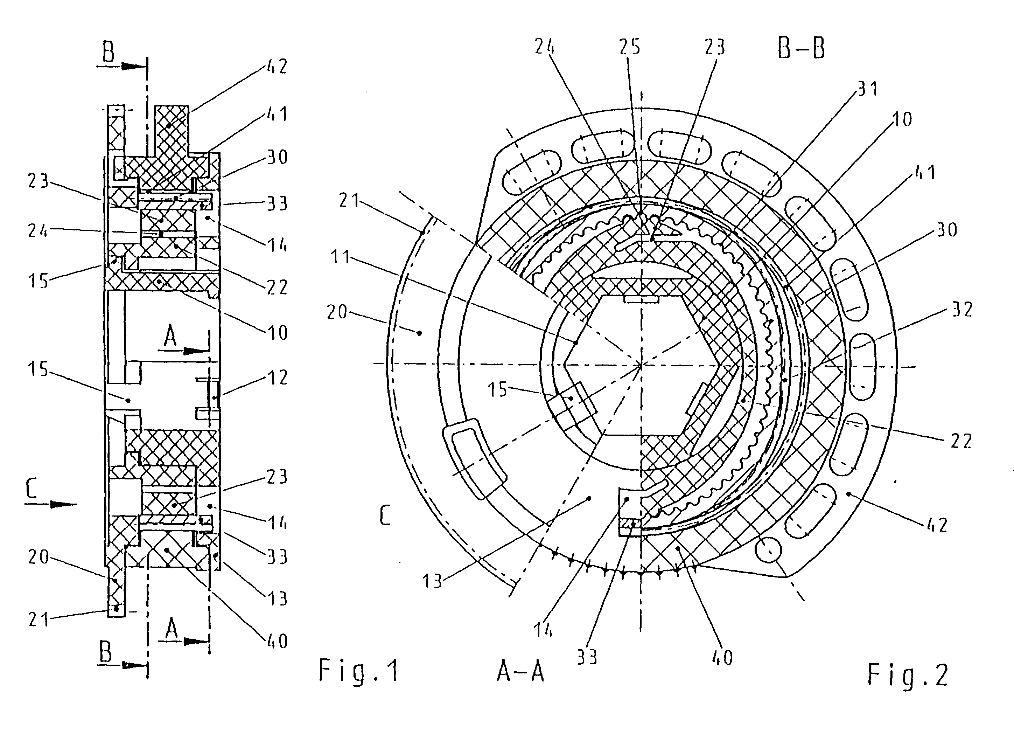

Der Grundkörper 10 wird mit einem Innensechskant 11 unverdrehbar auf einen Sechskant einer Welle, z. B. eines Stellantriebs oder dergleichen, aufgesetzt und mittels federnder Nasen 12 axial unverschiebbar reibschlüssig auf dem Sechskant der Welle gehalten. An seinem einen stirnseitigen Ende, in Figur 1 an seinem rechten Ende, ist an dem Grundkörper 10 ein radialer Flansch 13 angeformt, der zwei diametral angeordnete Aussparungen 14 aufweist.

Die Verstellscheibe 20 ist eine kreisringförmige Scheibe mit einer Rändelung 21 an ihrem Außenumfang. Am Innenrand der Verstellscheibe 20 ist einstückig ein Verformungskörper 22 axial angeformt. Der Verformungskörper 22 ist mit seiner kreiszylindrischen Innenfläche drehbar auf dem Außenumfang des Grundkörpers gelagert. An zwei diametralen Bereichen seines Außenumfangs weist der Verformungskörper Federzungen 23 auf, die durch in etwa parallel zur Tangentenebene verlaufende Einschnitte 24 von dem Verformungskörper 22 getrennt sind, so daß die freien Enden der Federzungen 23 radial federnd an dem Verformungskörper 22 angeordnet sind. Die radial etwas über den Außenumfang des Verformungskörpers 22 überstehenden freien Enden der Federzungen 23 sind auf ihrer Außenfläche mit Rastvorsprüngen 25 versehen.

Auf den Außenumfang des Verformungskörpers 22 ist der flexible Zahnring 30 aufgesetzt. Der flexible Zahnring 30 weist an seinem Innenumfang Rastvertiefungen 31 auf, die sich in einer vorgegebenen Winkelteilung über den gesamten Innenumfang des Zahnringes 30 erstrecken. Die Rastvorsprünge 25 der Federzungen 23 des Verformungskörpers 22 greifen federnd und rastend in die Rastvertiefungen 31 des Zahnringes 30 ein. Die diametral angeordneten Federzungen 23 des Verformungskörpers 22 verformen auf diese Weise den flexiblen Zahnring 30 elliptisch.

An seinem Außenumfang weist der flexible Zahnring 30 eine Außenverzahnung 32 auf. Der Zahnring 30 greift mit zwei axial vorspringend angeformten Laschen 33 in die Aussparungen 14 des Flansches 13 des Grundkörpers 10. Die Winkelbreite der Laschen 33 entspricht der Winkelbreite der Aussparungen 14, so daß der Zahnring 30 durch die in die Aussparungen 14 eingreifenden Laschen 33 unverdrehbar an dem Grundkörper 10 festgelegt ist. Die radiale Breite der Aussparungen 14 erlaubt jedoch die Radialbewegung des Zahnringes 30 bei seiner elliptischen Verformung durch die Federzungen 23 des Verformungskörpers 22.

Die Auslösescheibe 40 umschließt koaxial den flexiblen Zahnring 30. Die Auslösescheibe 40 weist an ihrem kreiszylindrischen Innenumfang eine Innenverzahnung 41 auf, deren Zahnteilung mit der Zahnteilung der Außenverzahnung 32 des flexiblen Zahnringes 30 übereinstimmt. Die Zahnzahl $Z_A$ der Innenverzahnung 41 ist jedoch etwas größer als die Zahnzahl $Z_F$ der Außenverzahnung 32 des Zahnrings 30. Beispielsweise weist die Innenverzahnung 41 der Auslösescheibe 40 $Z_A$=96 Zähne auf, während die Außenverzahnung 32 des flexiblen Zahnringes 30 $Z_F$=88 Zähne aufweist. Der Durchmesser der Innenverzahnung 41 der Auslösescheibe 40 ist um so viel größer als der Außendurchmesser des Verformungskörpers 22, daß der flexible Zahnring 30 durch die Federzungen 23 des Verformungskörpers 22 in zwei diametralen Winkelbereichen mit seiner Außenverzahnung 32 in Zahneingriff mit der Innenverzahnung 41 der Auslösescheibe 40 gebracht wird, während in den übrigen Winkelbereichen der elliptisch verformte Zahnring 30 mit seiner Außenverzahnung 32 radial nicht in Eingriff mit der Innenverzahnung 41 der Auslösescheibe 40 kommt.

An dem Außenumfang der Auslösescheibe 40 sind Mittel vorgesehen, die die Auslösung des Schalt- oder Steuervorgangs bewirken. Im dargestellten Ausführungsbeispiel ist am Außenumfang der Auslösescheibe 40 eine radial abstehende Nocke 42 angeformt, die einen Schaltvorgang auslöst, z. B. einen Endschalter betätigt oder dgl..

Die Verstellscheibe 20 ragt mit ihrem mit der Rändelung 21 versehenen Außenumfang über den Außenumfang der Auslösescheibe 40 hinaus, so daß die Verstellscheibe 20 leicht erfaßt und mittels ihrer Rändelung 21 verdreht werden kann.

Zur Montage der Vorrichtung wird zunächst der flexible Zahnring 30 axial auf den Verformungskörper 22 aufgeschoben, bis er an der Verstellscheibe 20 zur Anlage kommt. Dann wird die Auslösescheibe 40 axial aufgeschoben, bis auch diese an der Verstellscheibe 20 zur Anlage kommt. Schließlich wird der Grundkörper 10 axial in den Verformungskörper 22 eingeschoben, und mit an seinem (in Figur 1 linken) Ende angeformten äußeren Rastnasen 15 an der Verstellscheibe 20 verklipst. Dadurch werden der flexible Zahnring 30 und die Auslösescheibe 40 axial zwischen der Verstellscheibe 20 und dem Flansch 13 des Grundkörpers 10 gehalten.

Die Verstellscheibe 20 mit dem Verformungskörper 22 und die Auslösescheibe 40 sind gegeneinander und gegen den Grundkörper 10 frei verdrehbar gelagert. Der flexible Zahnring 30 ist mittels der in die Aussparungen 14 des Flansches 13 eingreifenden Laschen 33 verdrehfest an dem Grundkörper 10 gelagert.

Die Vorrichtung dient dazu, den durch die Nokke 42 bewirkten Auslösevorgang einer bestimmten Winkelstellung der Welle einstellbar zuzuordnen. Hierzu kann die Auslösescheibe 40 mit der Nocke 42 gegenüber dem drehfest auf der Welle sitzenden Grundkörper 10 verstellt werden. Hierzu wird manuell die Verstellscheibe 20 verdreht. Beim Verdrehen der Verstellscheibe 20 dreht sich der an dieser angeformte Verformungskörper 22, wobei die elliptische Verformung des drehfest gehaltenen flexiblen Zahnringes 30 entsprechend der Drehung des Verformungskörpers 22 wandert. Die mit ihren Rastvorsprüngen 22 in die Rastvertiefungen 31 des Zahnringes 30 einrastenden Federzungen 23 bewirken dabei, daß das Weiterdrehen der Verstellscheibe 20 mit dem Verformungskörper 22 in spürbaren Rastschritten entsprechend der Winkelteilung der Rastvertiefungen 31 des flexiblen Zahnringes 30 erfolgt. Die die Verstellscheibe 20 drehende Person spürt somit deutlich das schrittweise Weiterdrehen des Verformungskörpers 22. Außerdem verhindert die Einrastung der Rastvorsprünge 25 in die Rastvertiefungen 31 eine unerwünschte selbsttätige Verdrehung des Verformungskörpers 22 infolge von Vibrationen und Erschütterungen der Welle.

Der bei drehfest gehaltenem Zahnring 30 infolge der wandernden elliptischen Verformung des Zahnringes 30 wandernde Zahneingriff zwischen der Außenverzahnung 32 des Zahnringes 30 und der Innenverzahnung 41 der Auslösescheibe 40 bewirkt aufgrund der unterschiedlichen Zahnzahlen der Außenverzahnung 32 und der Innenverzahnung 41 eine Drehung der Auslösescheibe 40 mit einer Untersetzung, die der relativen Zahndifferenz entspricht, d. h. die Untersetzung i ergibt sich zu

$$i = \frac{Z_A - Z_F}{Z_A}$$

mit den Zahnzahlen $Z_A$ der Innenverzahnung 41 der Auslösescheibe 40 und $Z_F$ der Außenverzahnung 32 des Zahnringes 30. Bei dem oben angegebenen Beispiel mit den Zahnzahlen $Z_A$ = 96 und $Z_F$ = 88 ergibt sich somit eine Untersetzung i = 1 : 12. Bei einer vollen Umdrehung der Verstellscheibe 20 wird die Auslösescheibe 40 mit der Nocke 42 gegenüber der Welle und dem Grundkörper 10 um 30° Grad verstellt.

BEZUGSZEICHENLISTE

10    Grundkörper
11    Innensechskant
12    federnde Nasen
13    Flansch
14    Aussparungen
15    Rastnasen

20    Verstellscheibe
21    Rändelung
22    Verformungskörper
23    Federzungen
24    Einschnitte
25    Rastvorsprünge

30    flexibler Zahnring
31    Rastvertiefungen
32    Außenverzahnung
33    Laschen

40    Auslösescheibe
41    Innenverzahnung
42    Nocke

**Patentansprüche**

1.  Vorrichtung zur Auslösung eines Vorganges in Abhängigkeit von der Winkelstellung einer Welle, mit einem drehfest an der Welle angeordneten Grundkörper (10) und einer zu dem Grundkörper (10) koaxial gelagerten und in der Winkelstellung gegen den Grundkörper (10) drehverstellbaren Auslösescheibe (40), wobei an dem Grundkörper (10) koaxial drehbar eine Verstellscheibe (20) mit einem Verformungskörper (22) gelagert ist, wobei der Verformungskörper (22) in einem flexiblen außen verzahnten unverdrehbar an dem Grundkörper (10) festgelegten Zahnring (30) drehbar angeordnet ist und diesen unrund verformt, wobei der flexible Zahnring (30) entsprechend seiner Verformung mit begrenzten Umfangsbereichen seiner Außenverzahnung (32) im Zahneingriff mit der Innenverzahnung (41) eines koaxial gelagerten äußeren Zahnkranzes ist, wobei sich die Zahnzahl $Z_F$ der Außenverzahnung (32) des flexiblen Zahnringes (30) und die Zahnzahl ($Z_A$) der Innenverzahnung (41) des äußeren Zahnkranzes unterscheiden, wobei die in drehfester Verbindung mit dem äußeren Zahnkranz stehende Auslösescheibe (40) durch den Zahneingriff des flexiblen Zahnringes (30) mit dem äußeren Zahnkranz antreibbar ist und wobei der Verformungskörper (22) in Winkelteilungsschritten rastend gegen den flexiblen Zahnring (30) verdrehbar ist.

2.  Vorrichtung nach Anspruch 1,
    **dadurch gekennzeichnet**, dass der flexible Zahnring (30) mit einer oder mehreren axial abstehenden Laschen (33) in Aussparungen (14) eines radialen Flansches (13) des Grundkörpers (10) unverdrehbar, aber radial beweglich gehalten ist.

**3.** Vorrichtung nach Anspruch 1,
**dadurch gekennzeichnet**, dass die Verstellscheibe (20) an ihrem Außenumfang eine Rändelung (21) aufweist.

**4.** Vorrichtung nach Anspruch 1,
**dadurch gekennzeichnet**, dass der äußere Zahnkranz einstückig an der Auslösescheibe (40) ausgebildet ist.

**5.** Vorrichtung nach Anspruch 1,
**dadurch gekennzeichnet**, dass der Verformungskörper (22) an seinem Außenumfang Federzungen (23) aufweist, die in Rastvertiefungen (31) am Innenumfang des flexiblen Zahnringes (30) rastend eingreifen.

**6.** Vorrichtung nach einem der vorhergehenden Ansprüche,
**dadurch gekennzeichnet**, dass der Grundkörper (10), die Verstellscheibe (20) mit dem Verformungskörper (22), der flexible Zahnring (30) und die Auslösescheibe (40) mit der Innenverzahnung (41) jeweils einstückige Kunststoff-Spritzgussteile sind.

**7.** Vorrichtung nach Anspruch 6,
**dadurch gekennzeichnet**, dass der Grundkörper (10) und die Verstellscheibe (20) axial miteinander verklipst sind und dass der flexible Zahnring (30) und die Auslösescheibe (40) axial zwischen dem Flansch (13) des Grundkörpers (10) und der Verstellscheibe (20) gehalten sind.

## Claims

**1.** A device for initiating an action depending on the angular position of a shaft, having a basic member (10) disposed in torsion-free manner on the shaft and a release disk (40) mounted coaxially to the basic member (10) and rotatably adjustable in the angular position towards the basic member (10), wherein coaxially rotatably mounted on the basic member (10) is an adjusting disk (20) with a deformation member (22), wherein the deformation member (22) is rotatably disposed in a flexible, externally toothed annular gear (30) fixed in torsion-free manner to the basic member (10) and non-circularly deforms it, wherein the flexible annular gear (30), according to its deformation, with limited peripheral regions of its external toothing (32) is in toothed engagement with the internal toothing (41) of a coaxially mounted outer toothed ring, wherein the number of teeth $Z_F$ of the external toothing (32) of the flexible annular gear (30) and the number of teeth ($Z_A$) of the internal toothing (31) of the outer toothed ring are different, wherein the release disk (40) communicating in torsion-free manner with the outer toothed ring can be driven by the toothed engagement of the flexible annular gear (30) with the outer toothed ring and wherein the deformation member (22) can be twisted towards the flexible annular gear (30) in angular pitch steps.

**2.** A device according to Claim 1,
**characterised in that** the flexible annular gear (30) is retained in a torsion-free but radially movable manner with one or more axially protruding clips (33) in recesses (14) of a radial flange (13) of the basic member (10).

**3.** A device according to Claim 1,
**characterised in that** the adjusting disk (20) comprises a knurled edge (21) at its outer periphery.

**4.** A device according to Claim 1,
**characterised in that** the outer toothed ring is constructed in one piece on the release disk (40).

**5.** A device according to Claim 1,
**characterised in that** the deformation member (22) comprises flexible tongues (23) on its outer periphery, which engage by locking in snap-in cavities (31) on the inner periphery of the flexible annular gear (30).

**6.** A device according to one of the preceding Claims,
**characterised in that** the basic member (10), the adjusting disk (20) with the deformation member (22), the flexible annular gear (30) and the release disk (40) with the internal toothing (41) are each single-piece plastics injection-moulded parts.

**7.** A device according to Claim 6,
**characterised in that** the basic member (10) and the adjusting disk (20) are axially clipped to one another **and in that** the flexible annular gear (30) and the release disk (40) are axially retained between the flange (13) of the basic member (10) and the adjusting disk (20).

## Revendications

**1.** Dispositif de déclenchement d'une opération en fonction de la position angulaire d'un arbre, comprenant

un corps de base (10) monté solidaire en rotation sur l'arbre et un disque de déclenchement (40) monté coaxialement par rapport au corps de base (10) et réglable en rotation, en position angulaire, par rapport au corps de base (10), le corps de base (10) recevant de manière rotative coaxiale, un disque de réglage (20) avec un corps déformable (22),

le corps déformable (22) étant monté à rotation dans une bague dentée (30), à denture extérieure souple, fixée de manière solidaire en rotation sur le corps de base (10), et cette bague dentée (30) se déformant de manière non circulaire,

la bague dentée souple (30) étant engrenée selon sa déformation sur des zones périphériques limitées de sa denture extérieure (32), en prise avec la denture intérieure (41) d'une couronne dentée extérieure montée coaxialement,

le nombre de dents ($Z_F$) de la denture extérieure (32) de la bague dentée souple (30) et le nombre de dents ($Z_A$) de la denture intérieure (41) de la couronne dentée extérieure, étant différents,

le disque de déclenchement (40), solidaire en rotation de la couronne dentée extérieure, pouvant être entraîné par l'engrènement de la bague dentée souple (30) avec la couronne dentée extérieure, et

le corps déformable (22) pouvant tourner contre la bague dentée souple (30) en s'encliquetant selon des étapes de la division angulaire.

**2.** Dispositif selon la revendication 1, caractérisé en ce que

la bague dentée souple (30) est tenue, par une ou plusieurs pattes (33) dépassant axialement, dans des cavités (14) d'une bride radiale (13) du corps de base (10), suivant une liaison solidaire en rotation mais mobile radialement.

**3.** Dispositif selon la revendication 1, caractérisé en ce que

le disque de réglage (20) comporte à sa périphérie une partie moletée (21).

**4.** Dispositif selon la revendication 1, caractérisé en ce que

la couronne dentée extérieure est en une seule pièce sur le disque de déclenchement (40).

**5.** Dispositif selon la revendication 1, caractérisé en ce que

le corps déformable (22) comporte des languettes élastiques (23) à sa périphérie extérieure, ces languettes pénétrant dans des cavités d'encliquetage (31) de la périphérie intérieure de la bague dentée souple (30) suivant une liaison par encliquetage.

**6.** Dispositif selon l'une des revendications précédentes, caractérisé en ce que

le corps de base (10), le disque de réglage (20) avec le corps déformable (22), la bague dentée souple (30) et le disque de déclenchement (40) avec la denture intérieure (41) sont chaque fois des pièces en un seul morceau injecté en matière plastique.

**7.** Dispositif selon la revendication 6, caractérisé en ce que

le corps de base (10) et le disque de réglage (20) sont clipsés axialement l'un avec l'autre, et la bague dentée souple (30) et le disque de déclenchement (40) sont tenus axialement entre la bride (13) du corps de base (10) et le disque de réglage (20).

Fig.1

A-A

Fig.2

B-B

EP 0 743 474 B1